# EUROPEAN PATENT APPLICATION

(11) **EP 1 981 178 A2**
(43) Date of publication of application: **15.10.2008**
(21) Application number: 08007137.6
(22) Date of filing: 10.04.2008
(51) Int. Cl.: H04B 7/005

(54) **Radio communications system with improved dynamic control of the transmission power**

(30) Priority: 11.04.2007 IT mi20070730
(71) Applicant: MI.TEL-TELEOPTIX S.r.l., 20040 Cornate D'Adda (MI) (IT)
(72) Inventor: Bolla, Maurizio, 20040 Cornate d'Adda (MI) (IT); Granello, Guido, 20040 Cornate d'Adda (MI) (IT); Solbiati, Eugenio, 20040 Cornate d'Adda (MI) (IT)
(74) Representative: Colombo, Stefano Paolo

(57) **Abstract**

A radio communications system with dynamic control of the transmission power is described. The system comprises a first transceiver apparatus with a first outdoor unit and a second transceiver apparatus with a second outdoor unit. The first transceiver apparatus is configured to transmit a radio signal to the second transceiver apparatus. The second outdoor unit is configured to perform a measurement of the reception power of the radio signal and transmit the measurement of the reception power to the first transceiver apparatus. The first outdoor unit is configured to receive the measurement of the reception power and calculate a new value of the transmission power of the radio signal on the basis of the measurement of the reception power.

## Description

The present invention relates generally to the point-to-point radio communications sector. In particular, the present invention relates to a point-to-point radio communications system with a fast communications channel for dynamic control of the transmission power and an associated method for dynamic control of the transmission power in a radio communications system.

As is known, in a radio communications system the data to be transmitted is transported in the form of electromagnetic waves which are propagated in the air.

More particularly, a data sequence to be transmitted by means of a radio communications system is typically used to modulate an electromagnetic wave which has a carrier frequency typically in the range of radio waves or microwaves (Gigahertz range).

In the continuation of the description and in the claims, the expression "radio signal" will indicate an electromagnetic wave which has a carrier frequency in the radio wave or microwave range and is modulated with a data sequence to be transmitted. On the other hand, the expression "baseband signal" will indicate the data sequence to be transmitted.

A point-to-point radio communications system comprises two transceiver apparatus which are connected together via radio so as to form a radio network section. Typically, each transceiver apparatus, comprises an antenna, an outdoor unit and an indoor unit.

The outdoor unit may comprise a transmitter and a receiver connected to the antenna. The outdoor unit is able to receive from the antenna a radio signal, demodulate/modulate the corresponding baseband signal and forward the baseband signal to the indoor unit. Moreover, the outdoor unit is able to receive from the indoor unit a baseband signal to be transmitted, convert it into the corresponding radio signal and forward the radio signal to the antenna.

On the other hand, the indoor unit is able to drive the outdoor unit and comprises various functions for processing the baseband signals. One of the baseband signal processing functions which are currently performed by an indoor unit consists in dynamic control of the transmission power, also called ATPC ("Automatic Transmission Power Control").

Dynamic control of the transmission power allows advantageously dynamic adjustment of the transmission power of a radio signal depending on attenuation of the radio signal during its propagation in air.

A radio signal which is propagated in air is in fact typically subject to a series of phenomena which may modify the reception power. These phenomena include, for example, absorption due to rain or the presence of moisture in the air. Since the magnitude of these phenomena generally varies over time, the radio signal is subject to fading, i.e. its reception power also varies over time.

With dynamic control of the transmission power it is possible to compensate for the variations in the reception power of a radio signal, adjusting dynamically the transmission power so as to use the minimum transmission power needed to ensure a certain reception power.

In particular, according to the known ATPC architecture, the receiver of a transceiver apparatus which receives a radio signal includes a module able to measure the received power of the radio signal and forward this measurement to the indoor unit. The indoor unit then calculates, if necessary, a new transmission power value and drives the transmitter so that the radio signal is transmitted with the new transmission power value.

The known ATPC architecture envisages, therefore, a feedback ring which connects the indoor units of the two transceiver apparatus. The steps of sampling and processing the reception power and calculating the new value of the transmission power are in fact performed by the indoor units of the two transceiver apparatus.

The Applicant has noticed that in some cases the ATPC architecture described above does not produce satisfactory results.

More particularly, the Applicant has noticed that, in the case of particularly rapid fading (for example fading due to an unforeseen storm which typically induces a reduction in the signal power at speeds greater than 100 dB/S), dynamic modification of the transmission power performed by the ATPC is not sufficiently fast to ensure that the reception power always has a level such as to ensure correct operation of the receiver.

Therefore, the object of the present invention is to provide a radio communications system with dynamic control of the transmission power, in which the mechanism for dynamic control of the transmission power is faster than conventional ATPC architecture, so as to achieve compensation also for rapid fading which conventional ATPC is unable to cope with.

According to a first aspect, a radio communications system with dynamic control of the transmission power is provided, the system comprising: a first transceiver apparatus with a first outdoor unit and a second transceiver apparatus with a second outdoor unit, the first transceiver apparatus being configured to transmit a radio signal to the second transceiver apparatus, wherein: the second outdoor unit is configured to perform a measurement of the reception power of said radio signal and transmit said reception power measurement to said first transceiver apparatus; and the first outdoor unit is configured to receive said reception power measurement and calculate a new transmission power value of the radio signal on the basis of the reception power measurement.

The first outdoor unit typically comprises a first controller and the second outdoor unit comprises a second controller. The second controller is preferably configured to sample the radio signal, thus obtaining a sample indicating the reception power, insert the sample in a message and send the message to the first controller; and the first controller is configured to receive the message, read the sample and calculate the new transmission power value on the basis of the sample.

The second controller may be configured to transmit the message on a dedicated channel.

The second controller may be designed to insert in the message a checksum sequence and the first controller may be designed to check whether the message has been correctly received according to the checksum sequence.

The first controller may be configured to emit an alarm when the message has not been correctly received according to the checksum sequence.

In one embodiment, the first controller is configured to: leave the transmission power constant when, on the basis of said sample, the reception power is greater than or equal to a predetermined threshold; and increase the transmission power when, on the basis of the sample, the reception power is less than the predetermined threshold.

The first controller may, advantageously, be configured to increase said transmission power with a predetermined speed.

According to a second aspect, the invention provides a method for dynamic control of the transmission power in a radio communications system. The system comprises: a first transceiver apparatus with a first outdoor unit and a second transceiver apparatus with a second outdoor unit. The first transceiver apparatus is configured to transmit a radio signal to the second transceiver apparatus. The method comprises the following steps: performing a measurement of the reception power of the radio signal at the second outdoor unit; transmitting the reception power measurement to the first transceiver apparatus; receiving the reception power measurement at the first outdoor unit; and calculating, at the first outdoor unit, a new transmission power value of the radio signal on the basis of the reception power measurement.

The present invention will become clearer from a reading of the following detailed description, provided by way of a non-limiting example, to be read with reference to the accompanying drawings in which:
- Figure 1 shows schematically a radio communications system with dynamic control of the transmission power according to a first embodiment of the present invention;
- Figure 2 is a flow diagram which illustrates operation of the radio communications system according to Figure 1;
- Figure 3 is a power diagram which illustrates in greater detail the step of calculating the new transmission power value;
- Figures 4a and 4b illustrate schematically a radio communications system with dynamic control of the transmission power according to a second and third embodiment of the present invention, respectively; and
- Figure 5 shows schematically the structure of a message comprising a reception power measurement according to an embodiment of the present invention.

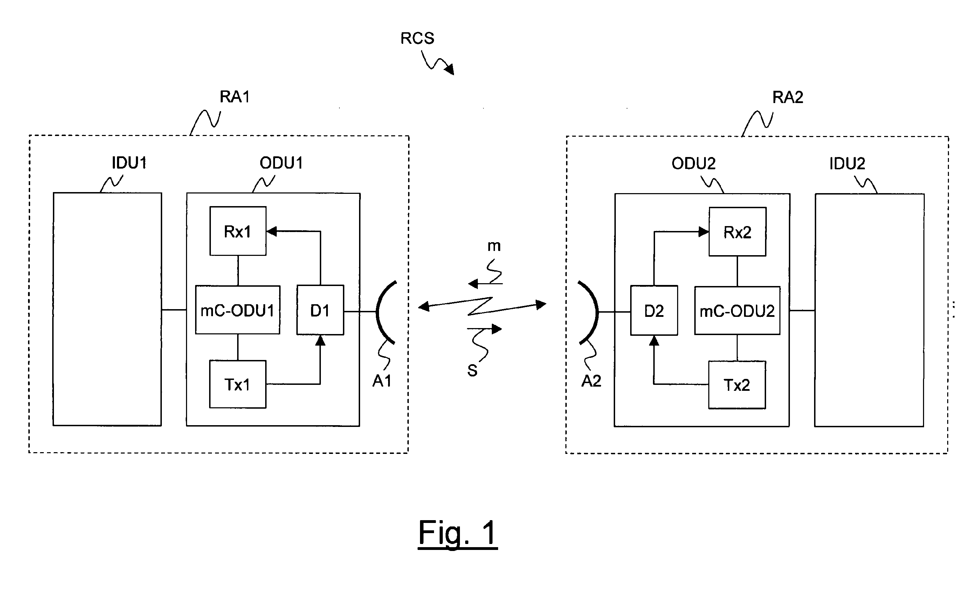

Figure 1 shows schematically a point-to-point radio communications system RCS with dynamic control of the transmission power, according to a first embodiment of the present invention.

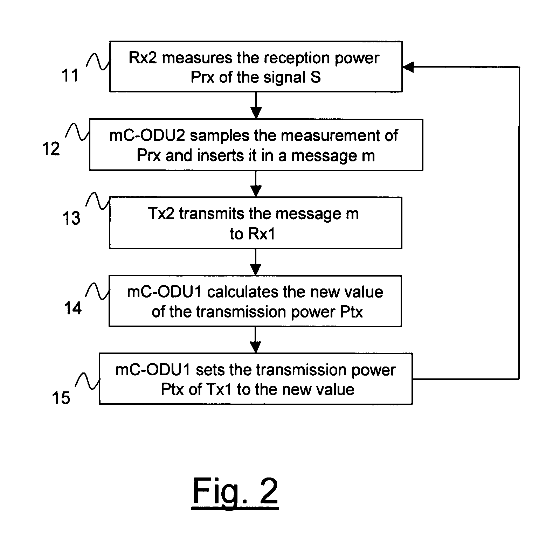

The system RCS according to Figure 1 comprises a first transceiver apparatus RA1 and a second transceiver apparatus RA2. As already mentioned in the introduction, the first transceiver apparatus RA1 comprises an antenna A1, an outdoor unit OD1 and an indoor unit IDU1. The outdoor unit ODU1 comprises a receiver Rx1 and a transmitter Tx1. The receiver Rx1 and the transmitter Tx1 are connected to the antenna A1 by means of a diplexer D1 which separates the incoming radio signals from the outgoing radio signals. According to the present invention, moreover, the transceiver apparatus RA1 also comprises a controller mC-ODU1 connected to the transmitter Tx1 and to the receiver Rx1. Operation of the controller mC-ODU1 will be explained in greater detail below, with reference to Figure 2. The indoor unit IDU1 is connected to the outdoor unit ODU1 for example via a cable. The internal structure of the indoor unit IDU1 is not described in greater detail since it is not useful for the purposes of the present description.

Similarly, the second transceiver apparatus comprises an antenna A2, an outdoor unit ODU2 and an indoor unit IDU2. The outdoor unit ODU2 comprises a receiver Rx2 and a transmitter Tx2. The receiver Rx2 and the transmitter Tx2 are connected to the antenna A2 by means of a diplexer D2 which separates the incoming radio signals from the outgoing radio signals. According to the present invention, moreover, the transceiver apparatus RA2 also comprises a controller mC-ODU2 connected to the transmitter Tx2 and to the receiver Rx2. Operation of the controller mC-ODU2 will be explained in greater detail below, with reference to Figure 2. The indoor unit IDU2 is connected to the outdoor unit ODU2, for example via a cable. The internal structure of the indoor unit IDU2 is not described in greater detail since it is not useful for the purposes of the present description.

According to the present invention, the controller mC-ODU1 of the first transceiver apparatus RA1 and the controller mC-ODU2 of the second transceiver apparatus RA2 are designed to implement dynamic control of the transmission power, as will be explained with reference to Figure 2.

Figure 2 shows the different operating steps of the system RCS of Figure 1 during a single operating period of the system. The steps shown in Figure 2 are preferably repeated for each operating period. This operating period may be, for example, 10 ms.

With reference to Figure 2, let us assume that the first transceiver apparatus transmits a radio signal S to the second transceiver apparatus RA2. This radio signal S is then transmitted by the transmitter Tx1 via the antenna A1 and is received by the receiver Rx2 via the antenna A2, as shown in Figure 1. The radio signal S is transmitted by Tx1 with a transmission power Ptx and is received by Rx2 with a reception power Prx. Owing to the attenuation occurring during propagation, the reception power Prx is less than the transmission power Ptx. Let us assume also that the attenuation of the signal S is variable over time, namely the reception power Prx is variable over time.

When the transceiver Tx1 starts to transmit the radio signal S with a transmission power Ptx, according to embodiments of the present invention, during a step 11, the receiver Rx2 measures the reception power Prx of the radio signal S received.

Advantageously, the measurement of the reception power Prx may be performed by means of a detection circuit included in the receiver Rx2.

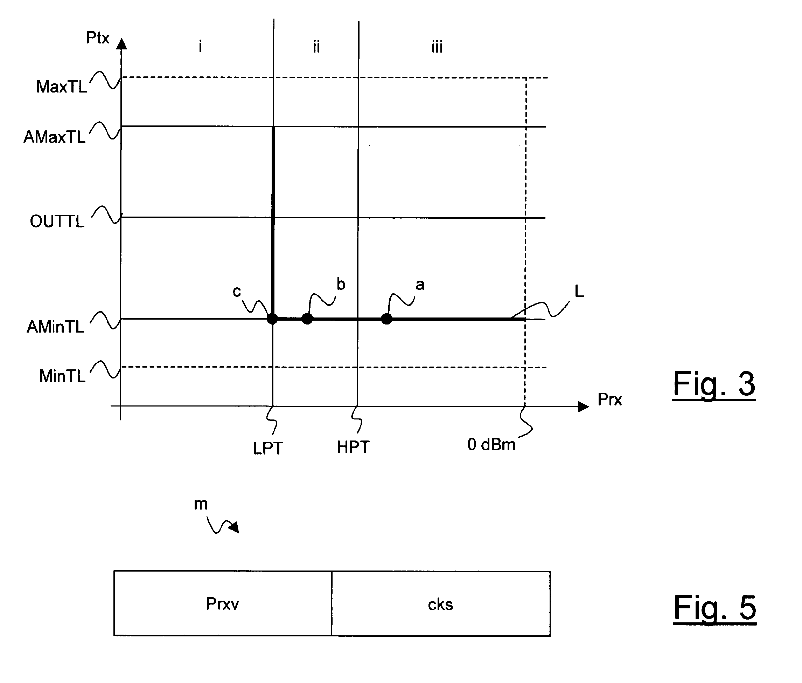

Then, during the next step 12, the receiver Rx2 forwards this measurement to the controller mC-ODU2 which samples it (preferably once for each operating period) and inserts the sample obtained in a message m. The structure of the message m according to a preferred embodiment of the invention will be described below with reference to Figure 5.

Then, during the next step 13, the transmitter Tx2 receives the message m from the controller mC-ODU2 and transmits it to the receiver Rx1 via the antenna A2. Preferably, the message m is transmitted using a dedicated channel for dynamic control of the transmission power, as will be seen in greater detail below. The receiver Rx1 then forwards the message to the controller mC-ODU1 (step not shown for the sake of simplicity in Figure 2).

Then, during the next step 14, the controller mC-ODU1 may calculate the new value of the transmission power Ptx, as will be seen below with reference to Figure 3. Then, at the end of the operating period, if during the step 14, the controller mc-ODU1 has calculated a new value of the transmission power Ptx, during a step 15 the controller mC-ODU1 sets the transmission power Ptx of the transmitter Tx1 so that it is equal to the new value calculated. If, on the other hand, during the step 14 no new value for the transmission power Ptx was calculated, the step 15 is not performed.

Preferably, during the step 15 the transmission power Ptx is set again to the new value with a given speed, for example of 1 dB for the operating period. During the step 15, if the controller mC-ODU1 establishes that the difference between the new value of the transmission power Ptx and the current value of the transmission power Ptx is greater than a predefined value (for example 6 dB), it may generate an alarm indicating that, since the speed of variation of the transmission power is low, variation of the transmission power may not be able to follow the variations of reception power due to fading.

The operating sequence described above is then repeated periodically: therefore, the steps 11-15 illustrated in Figure 2 are repeated periodically for example every 10 ms.

Therefore, advantageously, according to the present invention, the various steps of dynamic control of the transmission power are performed exclusively by the outdoor units of the transceiver apparatus. This has the advantageous result that dynamic control of the transmission power may be performed in a particularly rapid manner since these operations are performed without the need for intervention of the indoor unit. Therefore, advantageously, the dynamic power control according to the invention is able to adapt the transmission power also in the case of particularly rapid fading, for example with speeds of 100 dB/s or higher.

Figure 3 shows a power diagram, which illustrates in greater detail the step 14 for calculating the new value of the transmission power Ptx, according to an embodiment of the present invention.

The graph in Figure 3 shows the reception power Prx along the x axis and the transmission power Ptx along the y axis. A maximum value for the transmission power MaxTL and a minimum value for the transmission power MinTL are shown on the y axis. Preferably, the maximum transmission power value MaxTL and the minimum transmission power value MinTL are determined by the characteristics of the transmitter Tx1. For example, the maximum transmission power value MaxTL may be equal to 20 dBm, while the minimum transmission power value MinTL may be equal to 0 dBm.

Moreover, a maximum power value in automatic mode AmaxTL and a minimum power value in automatic mode AMinTL are shown on the y axis. These values represent the power range within which the value of the transmission power Ptx calculated during the step 14 by the controller mC-ODU1 may vary. Preferably, AMaxTL is less than or greater than the maximum transmission power value MaxTL, while AMinTL is greater than or equal to the minimum transmission power value MinTL, as shown in Figure 3. Moreover, preferably, AMaxTL is greater than AMinTL. Preferably, AmaxTL and AminTL can be selected by the operator, provided that they lie within MaxTI and MinTL.

The graph in Figure 3 shows, moreover, along the x axis, a minimum reception power value LPT and a maximum reception power value HPT. These values LPT and HPT represent, respectively, the minimum value and maximum value possible for the reception power Prx of the signal S at the receiver Rx2. Preferably, LPT and HPT are less than a predefined value (for example 0 dBm, as shown in Figure 3), which depends on the characteristics of the radio transmission channel between RA1 and RA2.

In the graph shown in Figure 3 it is possible to identify three different zones i, ii and iii, depending on the value of the reception power Prx. The first zone i is identified by values of Prx less than LPT; the second zone ii is identified by values of Prx lying between LPT and HPT; the third zone iii is identified by values of Prx greater than HPT (and less than 0 dBm).

When the transmitter Tx1 is activated, the dynamic power control system sets the transmission power Ptx to the minimum power value AminTL in automatic mode. If, at this transmission power Ptx, the reception power Prx is in the third zone iii (as, for example, indicated by the point "a" shown in Figure 3) or in the second zone ii (as, for example, indicated by the point "b" shown in Figure 3), the controller mC-ODU1 does not calculate any new transmission power Ptx and therefore the transmitter Tx1 continues to transmit the signal S with a transmission power equal to AMinTL.

If, instead, the reception power Prx reaches the minimum threshold LPT (namely attempts to enter the first zone, as shown in Figure 3 by means of the point "c"), the controller mC-ODU1 increases the transmission power, for example by 1 dB for each period, so as to bring the reception power Prx within the second zone ii.

Therefore, when dynamic control of the power is active, the working point of the system RCS (namely the point which represents the reception power Prx and the transmission power Ptx in the graph according to Figure 3) is forced to assume a position along the line L, also indicated in Figure 3.

The above description relates to dynamic control of the transmission power of a radio signal S transmitted in one direction (i.e. from RA1 to RA2) of the two-way connection between RA1 and RA2. According to embodiments of the present invention it is envisaged providing dynamic control of the transmission power also in the case of radio signals transmitted in the opposite direction, namely from RA2 to RA1 (not shown in Figure 1). Operation of this dynamic control of the transmission power is similar to that described above and therefore a detailed description will not be repeated here.

In the example of the system RCS shown in Figure 1, the case of a single two-way connection between the receiver apparatus RA1 and the receiver apparatus RA2 (connection"1+0") was considered.

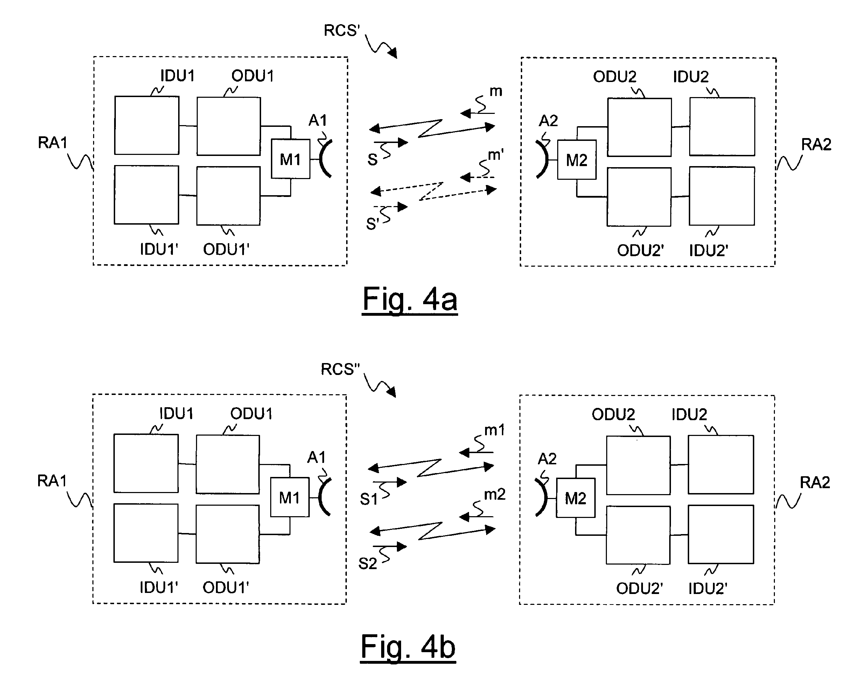

Let us consider now the case of a system RCS', shown in Figure 4a, where the two-way connection between the receiver apparatus RA1 and the receiver apparatus RA2 is redundant, namely it comprises a working connection and a standby connection which becomes operative only in the event of a malfunction of the working connection (connection "1+1").

For this purpose, the receiver apparatus RA1 comprises, as well as the antenna A1, the unit ODU1 and the unit IDU1 described above, an additional outdoor unit ODU1', an additional indoor unit IDU1' and a multiplexer M1 able to connect the outdoor units ODU1 and ODU1' to the antenna A1. Similarly, the receiver apparatus RA2 comprises, as well as the antenna A2, the unit ODU2 and the unit IDU2 described above, an additional outdoor unit ODU2', an additional indoor unit IDU2' and a multiplexer M2 able to connect the outdoor units ODU2 and ODU2' to the antenna A2.

The working connection is the connection between ODU1 and ODU2, while the standby connection is the connection between ODU1' and ODU2'. In this case, preferably, each connection between RA1 and RA2 has a respective mechanism for dynamic control of the transmission power. Operation of each mechanism for dynamic control of the transmission power is preferably similar to that described with reference to Figures 2 and 3. In particular, the mechanism for dynamic control of the transmission power of the signal S transmitted from ODU1 to ODU2 generates a message m which the outdoor unit ODU1 uses to implement control. Similarly, the mechanism for dynamic control of the transmission power of the signal S' transmitted from ODU1' to ODU2' generates a message m' which the outdoor unit ODU1' uses to implement control. According to preferred embodiments of the invention, only the mechanism for dynamic control of the transmission power for the working connection is active. In Figure 4a, by way of example, S in continuous lines is shown as operative, while S' in broken lines is not operative. Therefore, only dynamic control of the transmission power for the signal S is active (m in continuous lines is active, while m' in broken lines is not active).

In this case it is possible advantageously to obtain dynamic control of the transmission power more simply than compared to the known method of control.

Let us now consider the case of a system RCS", shown in Figure 4b, where the receiver apparatus RA1 and the receiver apparatus RA2 are connected by means of two independent two-way connections (connection "2+0").

In this case also, the receiver apparatus RA1 comprises, in addition to the antenna A1, the unit ODU1 and the unit IDU1 described above, an additional outdoor unit ODU1', an additional indoor unit IDU1' and a multiplexer M1 able to connect the outdoor units ODU1 and ODU1' to the antenna A1. Similarly, the receiver apparatus RA2 comprises, in addition to the antenna A2, the unit ODU2 and the unit IDU2 described above, an additional outdoor unit ODU2', an additional indoor unit IDU2' and a multiplexer M2 able to connect the outdoor units ODU2 and ODU2' to the antenna A2.

In this case, both the connection between ODU1 and ODU2 and the connection between ODU1' and ODU2' are both operative (for example, they support two different telephone channels).

In this case, preferably, the first and second connection each have a respective mechanism for dynamic control of the transmission power. Operation of each mechanism for dynamic control of the transmission power is preferably similar to that described with reference to Figures 2 and 3. In particular, the mechanism for dynamic control of the transmission power of a signal S1 transmitted from ODU1 to ODU2 generates a message m1 which the outdoor unit ODU1 uses to implement control. Similarly, the mechanism for dynamic control of the transmission power of a signal S2 transmitted from ODU1' to ODU2' generates a message m2 which the outdoor unit ODU1' uses to implement control. The two mechanisms for dynamic control of the power are preferably independently of each other.

Figure 5 shows schematically the structure of a message m comprising a measurement of the reception power Prx, according to an embodiment of the present invention. Preferably, as already mentioned, the message m is transmitted on a dedicated channel, for example at 8 kbit/s, which allows communication between the controllers mC-ODU1 and mC-ODU2 of the outdoor units of the two transceiver apparatus RA1 and RA2.

The message m is transmitted on the dedicated channel once for each operating period of the mechanism for dynamic control of the transmission power..

According to a preferred embodiment, the message m comprises a first field Prxv and a second checksum field cks (for example, comprising 6-bits). The first field Prvx comprises the value of the reception power Prx of the radio signal. Preferably, the value is expressed in dBm. Preferably, in the case where the maximum value of the reception power HPT is less than 0 dBm, only the absolute value of the reception power Prx is transmitted, since its value is certainly negative. Preferably, when the message m is received by an outdoor unit and forwarded to the controller of the outdoor unit, the controller checks the checksum. If the checksum indicates that the message m has been received correctly, the controller extracts the value of the received power from the field Prxv and continues with processing (steps 14-15 in the flow diagram according to Figure 2). If, instead, the checksum indicates that the message m has not been received correctly, the message m is discarded. Preferably, if the checksum indicates that the message m has not been received correctly for a predefined number of consecutive messages m (namely for a predefined number of consecutive operating periods), the controller generates an alarm which indicates malfunctioning of the dedicated channel.

Therefore, advantageously, with the present invention it is possible to implement dynamic control of the transmission power in a radio communications system, including in the outdoor units of the transceiver apparatus of the system controllers able to measure the reception power and calculate the new transmission power on the basis of the reception power received, avoiding use of the indoor units for dynamic control of the transmission power. Therefore, dynamic control is advantageously particularly rapid, allowing compensation of fading at speeds in the region of 100 dB/s.

## Claims

1. Radio communications system (RCS) with dynamic control of the transmission power, the system (RCS) comprising: a first transceiver apparatus (RA1) with a first outdoor unit (ODU1) and a second transceiver apparatus (RA2) with a second outdoor unit (ODU2), the first transceiver apparatus (RA1) being configured to transmit a radio signal (S) to the second transceiver apparatus (RA2), **characterized in that**:
- the second outdoor unit (ODU2) is configured to perform a measurement of the reception power (Prx) of said radio signal (S) and transmit said measurement of the reception power (Prx) to said first transceiver apparatus (RA1); and
- the first outdoor unit (ODU1) is configured to receive said measurement of the reception power (Prx) and calculate a new value of the transmission power (Ptx) of the radio signal (S) on the basis of the measurement of the reception power (Prx).

2. System according to Claim 1, **characterized in that** said first outdoor unit (ODU1) comprises a first controller (mC-ODU1) and the second outdoor unit (ODU2) comprises a second controller (mC-ODU2), in which:
- the second controller (mC-ODU2) is configured to sample said radio signal (S), thus obtaining a sample indicating said reception power (Prx), insert said sample in a message (m) and send said message to said first controller (mC-ODU1); and
- the first controller (mC-ODU1) is configured to receive said message (m), read said sample and calculate said new transmission power value (Ptx) on the basis of said sample.

3. System according to Claim 2, **characterized in that** said second controller (mC-ODU2) is configured to transmit said message on a dedicated channel.

4. System according to Claim 2 or 3, **characterized in that** said second controller (mC-ODU2) is designed to insert in said message a checksum sequence (cks) and said first controller (mC-ODU1) is designed to check whether said message (m) has been correctly received in accordance with said checksum sequence (cks).

5. System according to Claim 4, **characterized in that** said first controller (mC-ODU1) is configured to emit an alarm when said controller establishes that said message (m) has not been correctly received in accordance with said checksum sequence (cks).

6. System according to any one of Claims 2 to 5, **characterized in that** said first controller is configured to:
- leave said transmission power (Ptx) constant when it establishes, on the basis of said sample, that said reception power (Prx) is greater than or equal to a predetermined threshold (LPT); and
- increase said transmission power (Ptx) when it establishes, on the basis of said sample, that said reception power (Prx) is less than said predetermined threshold (LPT).

7. System according to Claim 6, **characterized in that** said first controller (mC-ODU1) is configured to increase said transmission power (Ptx) with a predetermined speed.

8. System according to Claim 6 or 7, **characterized in that** said first controller (mC-ODU1) is configured to increase said transmission power (Ptx) to a maximum value (AMaxTL).

9. Method for dynamic control of the transmission power in a radio communications system (RCS), the system (RCS) comprising: a first transceiver apparatus (RA1) with a first outdoor unit (ODU1) and a second transceiver apparatus (RA2) with a second outdoor unit (ODU2), the first transceiver apparatus (RA1) being configured to transmit a radio signal (S) to the second transceiver apparatus (RA2), **characterized in that** it comprises the following steps:
a) performing a measurement of the reception power (Prx) of said radio signal (S) at the second outdoor unit (ODU2);
b) transmitting said measurement of the reception power (Prx) to said first transceiver apparatus (RA1);
c) receiving said measurement of the reception power (Prx) at the first outdoor unit (ODU1); and
d) calculating, at the first outdoor unit (ODU1), a new value of the transmission power (Ptx) of the radio signal (S) on the basis of the measurement of the reception power (Prx).

10. Method according to Claim 9, **characterized in that**:
- said step a) comprises the step of sampling said radio signal (S), thus obtaining a sample indicating said reception power (Prx) and inserting said sample in a message (m); and
- said step d) comprises the step of reading said sample and calculating said new value of the transmission power (Ptx) on the basis of said sample.

11. Method according to Claim 10, **characterized in that** said step b) comprises transmitting said message (m) on a dedicated channel.

12. Method according to Claim 10 or 11, **characterized in that**:
- said step a) comprises a step of inserting a checksum sequence (cks) in said message (m);
- said step d) comprises a step of checking whether said message (m) has been received correctly on the basis of said checksum sequence (cks) .

13. Method according to Claim 12, **characterized in that** said step d) also comprises a step of emitting an alarm when it is established that said message (m) has not been received correctly on the basis of said checksum sequence (cks).

14. Method according to any one of Claims 10 to 13, **characterized in that** said step d) comprises the following steps:
d1) leaving said transmission power (Ptx) constant when it is established, on the basis of said sample, that said reception power (Prx) is greater than or equal to a predetermined threshold (LPT); and
d2) increasing said transmission power (Ptx) when it is established, on the basis of said sample, that said reception power (Prx) is less than said predetermined threshold.

15. Method according to Claim 14, **characterized in that** said step d2) comprises the step of increasing said transmission power (Ptx) with a predetermined speed.

16. Method according to Claim 14 or 15, **characterised in that** said step d2) comprises the step of increasing said transmission power (Ptx) to a maximum value (AmaxTL).
